# EUROPÄISCHE PATENTSCHRIFT

(11) **EP 4 299 484 B1**
(45) Veröffentlichungstag und Bekanntmachung des Hinweises auf die Patenterteilung: **23.09.2026**
(21) Anmeldenummer: 22182426.1
(22) Anmeldetag: 30.06.2022
(51) Int. Cl.: B65G 43/08, B65G 47/31

(54) **VERFAHREN ZUR STEUERUNG EINER MIT RETROFITTING ZUGEFÜGTEN FÖRDERSTRECKE FÜR STÜCKGÜTER**
METHOD FOR CONTROLLING A CONVEYOR TRACK FOR PIECE GOODS WITH A RETROFIT
PROCÉDÉ DE COMMANDE D'UNE SECTION DE TRANSPORT MONTÉE ULTÉRIEUREMENT POUR MARCHANDISES EN VRAC

(43) Veröffentlichungstag der Anmeldung: 03.01.2024
(73) Patentinhaber: Siemens Aktiengesellschaft, 80333 München (DE)
(72) Erfinder: TOKIC, Michel, 88069 Tettnang (DE); VON BEUNINGEN, Anja, 99085 Erfurt (DE); BISCHOFF, Martin, 85653 Aying, Grosshelfendorf (DE); GROSSENBACHER, David, 160 00 Prag 6-Dejvice (CZ)
(74) Vertreter: Siemens Patent Attorneys

(56) Entgegenhaltungen:
- EP-A1- 1 280 720
- EP-A1- 3 458 388
- EP-B1- 1 280 720
- EP-B1- 3 458 388
- US-A- 5 038 911
- RAILEANU SILVIU ET AL: "Integrating the Digital Twin of a Shop Floor Conveyor in the Manufacturing Control System", vol. 853, 3 August 2019 (2019-08-03), pages 134 - 145, XP009540877, ISBN: 978-3-030-27476-4, Retrieved from the Internet <URL:https://www.semanticscholar.org/paper/Integrating-the-Digital-Twin-of-a-Shop-Floor-in-the-Raileanu-Borangiu/e61f4a62c532a5a266ed5e4dd493ae77fd03a8c0> [retrieved on 20190803], DOI: 10.1007/978-3-030-27477-1_10
- AYANI M. ET AL: "Digital Twin: Applying emulation for machine reconditioning", PROCEDIA CIRP, vol. 72, 1 January 2018 (2018-01-01), NL, pages 243 - 248, XP055865648, ISSN: 2212-8271, DOI: 10.1016/j.procir.2018.03.139
- DALIBOR MANUELA ET AL: "A Cross-Domain Systematic Mapping Study on Software Engineering for Digital Twins", JOURNAL OF SYSTEMS & SOFTWARE, ELSEVIER NORTH HOLLAND, NEW YORK, NY, US, vol. 193, 11 June 2022 (2022-06-11), XP087172301, ISSN: 0164-1212, [retrieved on 20220611], DOI: 10.1016/J.JSS.2022.111361
- ANONYMOUS: "Flexible, fast, and sustainable with the comprehensive digital twin for intralogistics", 27 April 2022 (2022-04-27), pages 1 - 5, XP093003140, Retrieved from the Internet <URL:https://press.siemens.com/global/en/pressrelease/flexible-fast-and-sustainable-comprehensive-digital-twin-intralogistics> [retrieved on 20221129]

## Beschreibung

Die Erfindung betrifft ein Verfahren zur Steuerung einer Förderstrecke für Stückgut, wobei die gesteuerte Förderstrecke eine Mehrzahl von sich aneinander anschließender Teilförderstrecken umfasst, welche jeweils von einem Antrieb angetrieben werden.

Viele Logistiksysteme basieren darauf, dass auf Förderstrecken Stückgüter wie z.B. Pakete oder einzelne Produkte transportiert werden. Eine Förderstrecke setzt sich hierbei üblicherweise aus einer Mehrzahl von Teilförderstrecken zusammen, welche hintereinander angeordnet sind, so dass ein Stückgut unterbrechungsfrei von einer Teilförder-strecke an eine andere, angrenzende Teilförder-strecke übergeben werden kann. Jede Teilförderstrecke enthält ein Förderband, auf welchem das Stückgut bewegt wird. Alternativen zu Förderbänder sind Schienensysteme oder Multi-Carrier-Systeme. Mehrere solcher Förderstrecken können wiederum beliebig kompliziert kombiniert werden, z.B. indem mehrere Förderstrecken parallel zueinander verlaufen und in einen gemeinsamen Abschnitt münden.

Die Förderbänder der Teilförderstrecken werden jeweils mit einem eigenen Antrieb angetrieben, so dass die Geschwindigkeit jeder Teilförderstrecke individuell einstellbar ist. Diese Ansteuerung erfolgt üblicherweise mit einer schnellen Taktung, so dass sehr genau einstellbar ist, wann ein Stückgut einen bestimmten Zielort insbesondere auf der letzten Teilförder-strecke trifft. Dies erfordert, dass die Teilförderstrecken aufgrund von Steuersignalen einer Recheneinheit optimal von ihrem jeweils zugeordneten Antrieb beschleunigt oder verzögert werden. Schlechte Steuerung äußert sich z.B. dadurch, dass Stückgüter kollidieren, von der Förderstrecke fallen, nicht den erwünschten Zielort erreichen, oder am Zielort nicht einen erwünschten Mindestabsatand zum vorher dort angekommenen Stückgut einhalten.

### Das Dokument

RAILEANU SILVIU ET AL: "lntegrating the Digital Twin of a Shop Floor Conveyor in the Manufacturing Control System", SERVICE ORIENTED, HOLONIC AND MULTl-AGENT MANUFACTURING SYSTEMS FOR INDUSTRY OF THE FUTURE: PROCEEDINGS OF SOHOMA 2019; (VALENCIA): 2019.10.03-04; STUDIES IN COMPUTATIONAL INTELLIGENCE; ISSN 1860-94 beschreibt einen Architekturentwurf und eine Implementierungslösung für einen digitalen Zwilling eines Transportsystems eines Fabrikhalle. Produkte werden auf Paletten zusammengestellt, die auf einem Förderband zwischen den Arbeitsstationen transportiert werden. KI-Techniken werden in der cloud-Schicht des virtueller Zwillings verwendet.

Der Erfindung liegt die Aufgabe zugrunde, ein Verfahren zur Steuerung einer Förderstrecke für Stückgut aufzuzeigen.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechendes computerlesbares, vorzugsweise nichtflüchtiges, Speichermedium, und ein entsprechendes Datenträgersignal. Vorteilhafte Ausgestaltungen und Weiterbildungen sind Gegenstand von Unteransprüchen.

Das erfindungsgemäße Verfahren dient der Steuerung einer mit Retrotitting zugefügten Förderstrecke für Stückgut. Die Förderstrecke umfasst eine Mehrzahl von sich aneinander anschließender Teilförderstrecken, welche jeweils von einem Antrieb angetrieben werden. Die Förderstrecke ist eine Erweiterung von mindestens einer bestehenden weiteren Förderstrecke. Die Steuerung der Antriebe erfolgt mittels einer Recheneinheit mit einem Machine-Learning-Modell. Das Machine-Learning-Modell erhält hierzu erste Eingangsdaten basierend auf aktuellen Betriebsinformationen der zumindest einen weiteren Förderstrecke, wobei die zumindest eine weitere Förderstrecke nicht von dem Machine-Learning-Modell gesteuert wird. Die Förderstrecke und die zumindest eine weitere Förderstrecke befördern Stückgüter auf einen gemeinsamen Abschnitt. Das Machine-Learning-Modell wurde zuvor mit zweiten Eingangsdaten basierend auf Betriebsinformationen der zumindest einen weiteren Förderstrecke trainiert, wobei in einem ersten Schritt ein Prognose-Modell erlernt wird, basierend auf historischen Betriebsinformationen der mindestens einen weiteren Förderstrecke und danach trainiert das Machine-Learning-Modell unter Verwendung des Prognose-Modells die Steuerung der Förderstrecke. Das trainierte Machine-Learning-Modell erhält zur Steuerung Output Werte des Proqnose-Modells, basierend auf aktuellen Betriebsinformationen der mindestens einen weiteren Förderstreck, sowie aktuelle Betriebsinformationen der von ihm gesteuerten Förderstrecke. Weiterhin ermittelt das trainierte Machine-Learning-Modell zur Steuerung Geschwindigkeiten für die Teilförderstrecken der von ihm gesteuerten Förderstrecke und gibt diese vor. Die Betriebsinformationen der zumindest einen weiteren Förderstrecke betreffen Messwerte von Sensoren zur Erfassung von Stückgut und Geschwindigkeiten von Teilförderstrecken.

Es liegt eine von dem Machine-Learning-Modell zu steuernde Förderstrecke mit mehreren Teilförderstrecken vor. Dadurch, dass die Teilförderstrecken jeweils über einen eigenen Antrieb verfügen, können sie individuell beschleunigt oder verzögert werden. Diese Beschleunigung oder Verzögerung kann auch einen Beschleunigungs- oder verzögerungswert von 0 umfassen, d.h. eine Teilförderstrecke kann auch zumindest zeitweise mit konstanter Geschwindigkeit betrieben werden. Durch das selektive Beschleunigen oder Verzögern jeder Teilförderstrecke kann ein für die Förderstrecke vorgegebenes Ziel erreicht werden, z.B. dass ein transportiertes Stückgut sich zu einem bestimmten Zeitpunkt am Ende der letzten Teilförderstrecke einfindet. Gesteuert werden die Antriebe der Teilförderstrecken durch eine Recheneinheit. Diese gibt den Antrieben vor, welche Geschwindigkeit einzustellen ist oder alternativ, welche Beschleunigung oder Verzögerung.

Außer der von dem Machine-Learning-Modell zu steuernden Förderstrecke ist bzw. sind eine oder mehrere weitere Förderstrecken vorhanden, deren Betrieb sich auf die Steuerung der Förderstrecke auswirkt. Deren Betriebsinformationen finden direkt oder in verarbeiteter Form Eingang sowohl in das Training des Machine-Learning-Modells, als auch in die Steuerung der Förderstrecke durch das Machine-Learning-Modell. Bei den Eingangsdaten, welche dem Machine-Learning-Modell für die Steuerung zur Verfügung gestellt werden, handelt es sich um aktuelle Informationen, d.h. sie beschreiben den aktuellen Zustand der zumindest einen nicht von dem Machine-Learning-Modell gesteuerten Förderstrecke. Dies schließt selbstverständlich einen gewissen zeitlichen Verzug nicht aus, welcher zwischen der Ermittlung des Zustands der zumindest einen weiteren Förderstrecke und dem Empfang der Eingangsdaten durch das Machine-Learning-Modell liegen kann. Die Eingangsdaten hingegen, welche dem Machine-Learning-Modell für das Training dienen, können historische Informationen sein; d.h. die jeweiligen Betriebsinformationen können zu einem früheren Zeitpunkt erfasst worden sein.

Die Betriebsinformationen der zumindest einen weiteren Förderstrecke betreffen Messwerte von Sensoren zur Erfassung von Stückgut und Geschwindigkeiten von Teilförderstrecken. Die zumindest eine weitere Förderstrecke umfasst eine Mehrzahl von Teilförderstrecken, wobei zumindest eine der Teilförderstrecken mit einem Sensor zur Detektion von Stückgut ausgestattet ist. Es ist möglich, dass manche oder alle der Teilförderstrecken einen solchen Sensor aufweisen, und auch, dass mehrere Sensoren pro Teilförderstrecke vorgesehen sind. Die Positionierung der Sensoren in Bezug auf die Erstreckung der Teilförderstrecken kann die gleiche sein, z.B. jeweils am Anfang einer Teilförderstrecke, sie kann sich aber auch von Teilförderstrecke zu Teilförderstrecke unterscheiden. Vorzugsweise handelt es sich bei den Sensoren um Lichtschranken. Andere Beispiele für geeignete Sensoren sind: 2D/3D-Kameras, RFID-Empfänger in Kombination mit RFID-Tags auf dem Stückgut, Induktionsschleifen.

Neben der von dem Machine-Learning-Modell zu steuernden Förderstrecke kann eine oder mehrere zusätzliche Förderstrecken vorhanden sein, welche auch von dem Machine-Learning-Modell gesteuert werden. In Bezug auf diese kann das beschriebene Verfahren entsprechend angewandt werden.

In Weiterbildung der Erfindung umfassen die ersten und zweiten Eingangsdaten zumindest einen aus den Betriebs informationen ermittelten zeitlichen Prognosewert über das Eintreffen eines auf der zumindest einen weiteren Förderstrecke beförderten Stückgutes an einer bestimmten Position. Dieser zumindest eine Prognosewert kann von dem Machine-Learning-Modell ermittelt werden; in diesem Fall erhält das Machine-Learning-Modell zunächst die Betriebsinformationen, aus welchen es die Eingangsdaten in Form des zumindest einen Prognosewertes ermittelt. Alternativ kann der zumindest eine Prognosewert auch außerhalb des Machine-Learning-Modells ermittelt werden, so dass das Machine-Learning-Modell als Eingangsdaten nur den zumindest einen Prognosewert erhält, und nicht zusätzlich die Betriebsinformationen.

Der zumindest eine Prognosewert vermittelt eine zeitbezogene Information. Dies ist vorzugsweise die noch zu vergehende Zeitspanne, bis das nächste Stückgut die bestimmte Position erreicht. Zusätzlich oder alternativ kann auch ein Prognosewert für eine Zeitspanne, bei deren Ablauf dieses Stückgut die bestimmte Position wieder verlassen haben wird, verwendet werden. Es können auch mehrere Zeitspannen prognostiziert werden, bis das zweitnächste, drittnächste, usw. Stückgut die bestimmte Position erreicht und/oder verlässt.

Die Prognose betrifft jeweils Stückgüter, welche nicht auf der von dem Machine-Learning-Modell gesteuerten Förderstrecke transportiert werden, d.h. das Eintreffen an der bestimmten Position unterliegt nicht der Kontrolle des Machine-Learning-Modells.

Vorzugsweise ist die bestimmte Position eine von einem Sensor zur Erfassung von Stückgut vermessene Position. Sie kann sich auf der zumindest einen weiteren Förderstrecke befinden, vorzugsweise an deren Ende. Die bestimmte Position kann jedoch auch außerhalb der zumindest einen weiteren Förderstrecke angeordnet sein, z.B. auf einer sich an die zumindest eine weitere Förderstrecke anschließenden Einrichtung. Besonders vorteilhaft ist es, wenn die bestimmte Position sich auf einem Abschnitt, welcher der von dem Machine-Learning-Modell gesteuerten Förderstrecke und der zumindest einen weiteren Förderstrecke gemeinsam ist, befindet.

In Weiterbildung der Erfindung wird der zumindest eine Prognosewert ermittelt, indem zumindest eine Sägezahnfunktion gebildet wird, welche eine verbleibende Zeitspanne bis zum Eintreffen eines auf der zumindest einen weiteren Förderstrecke beförderten Stückgutes an der bestimmten Position anzeigt. Der Einsatz einer Sägezahnfunktion erlaubt eine Vorhersage des zumindest einen Prognoswertes über viele Zeitschritte. Besonders vorteilhaft ist es hierbei, wenn die zumindest eine Sägezahnfunktion ausgehend von Messwerten eines die bestimmte Position vermessenenden Sensors zur Erfassung von Stückgut gebildet wird.

Einer Ausgestaltung der Erfindung gemäß wird der zumindest eine Prognosewert von einem von dem Machine-Learning-Modell unabhängigen Prognose-Modell ermittelt, wobei das Prognose-Modell unter Verwendung von Betriebsinformationen der zumindest einen weiteren Förderstrecke erstellt wurde. Es finden also zwei Modelle Einsatz: das Machine-Learning-Modell zur Steuerung der Förderstrecke, und das Prognose-Modell zur Erstellung der Prognosewerte. Letzteres wurde unter Verwendung von Betriebsinformationen der zumindest einen weiteren Förderstrecke erstellt, so dass es als Eingabe derartiger Betriebsinformationen bedarf, um Prognosewerte zu ermitteln. Die Ergebnisse des Prognose-Modells, also die Prognosewerte, werden dann von dem Prognose-Modell dem Machine-Learning-Modell zur Verfügung gestellt.

Die Förderstrecke und die zumindest eine weitere Förderstrecke befördern Stückgüter auf einen gemeinsamen Abschnitt. Durch die von dem Machine-Learning-Modell gesteuerte Förderstrecke und die zumindest eine weitere Förderstrecke wird somit ein System gebildet, in welchem Stückgüter verschiedener Förderstrecken auf einen diesen verschiedenen Förderstrecken gemeinsamen Abschnitt, welcher sich an das Ende der jeweiligen Förderstrecken anschließen kann, transportiert werden.

In Ausgestaltung der Erfindung wurde das Machine-Learning-Modell mit einem Reinforcement-Learning-Algorithmus mit der Vorgabe trainiert, dass Stückgüter auf der gesteuerten Förderstrecke so zu befördern sind, dass sie den gemeinsamen Abschnitt mit einem vorgegebenen Abstand zu Stückgütern der zumindest einenen weiteren Förderstrecke erreichen. Dieser vorgegebene Abstand kann z.B. Null betragen, d.h. zwei Stückgüter verschiedener Förderstrecken sollen unmittelbar aneinander anschließen, z.B. mit dem Ziel, mehere Stückgüter parallel zu verpacken, oder ein bestimmter Mindestabstand sein, oder auch eine exakte Abstandsangabe.

Besonders vorteilhaft ist es, wenn die bestimmte Position sich auf dem gemeinsamen Abschnitt befindet. Hierdurch wird ermöglicht, dass aufgrund der Prognosewerte erkennbar ist, wann die bestimmte Position auf dem gemeinsamen Abschnitt nicht durch Stückgüter der zumindest einen weiteren Förderstrecke belegt ist, so dass sie durch Stückgüter belegt werden kann, die auf der von dem Machine-Learning-Modell gesteuerten Förderstrecke befördert werden.

In Ausgestaltung der Erfindung erhält das Machine-Learning-Modell zur Steuerung dritte Eingangsdaten basierend auf aktuellen Betriebsinformationen der von ihm gesteuerten Förderstrecke, und es wurde mit vierten Eingangsdaten basierend auf aus einer Simulation erhaltenen Betriebsinformationen der von ihm gesteuerten Förderstrecke trainiert. Die Art der Betriebsinformationen entspricht hierbei denjenigen der zumindest einen weiteren Förderstrecke, d.h. sie betreffen Messwerte von Sensoren zur Erfassung von Stückgut und Geschwindigkeiten von Teilförderstrecken.

Einer Weiterbildung der Erfindung gemäß wird die zumindest eine weitere Förderstrecke mit einem dem Machine-Learning-Modell unbekannten Steueralgorithmus gesteuert. Der Steuerung der Förderstrecke durch das Machine-Learning-Modell liegen somit zwar die Betriebsinformationen der zumindest einen nicht von ihm gesteuerten Förderstrecke zugrunde, nicht jedoch Kenntnisse über das Verfahren zur Steuerung dieser zumindest einen weiteren Förderstrecke.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Es kann beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Es kann auch zumindest teilweise in einer Cloud und/oder in einer Edge-Computing-Umgebung ausgeführt werden. Für den computergestützten Ablauf kommt eines oder mehrere miteinander zusammenwirkende Computerprogramme zum Einsatz. Werden mehrere Programme verwendet, so können diese gemeinsam auf einem Computer gespeichert und von diesem ausgeführt werden, oder auch auf verschiedenen Computern an verschiedenen Orten. Da dies funktional gleichbedeutend ist, wird vorliegend im Singular "das Computergrogramm" und "der Computer" formuliert.

Im Folgenden wird die Erfindung anhand eines Ausführungsbeispiels näher erläutert. Dabei zeigen:
Figur 1: eine einfache Förderstrecke,
Figur 2: eine mehrere Finger aufweisende Förderstrecke,
Figur 3: einen Verlauf von Betriebsdaten einer Förderstrecke und hieraus abgeleitete Informationen,
Figur 4: ein Ablaufdiagramm,
Figur 5: eine Steuereinheit für die Bewegungskontrolle einer Förderstrecke,
Figur 6: eine detailliertere Darstellung der Steuereinheit.

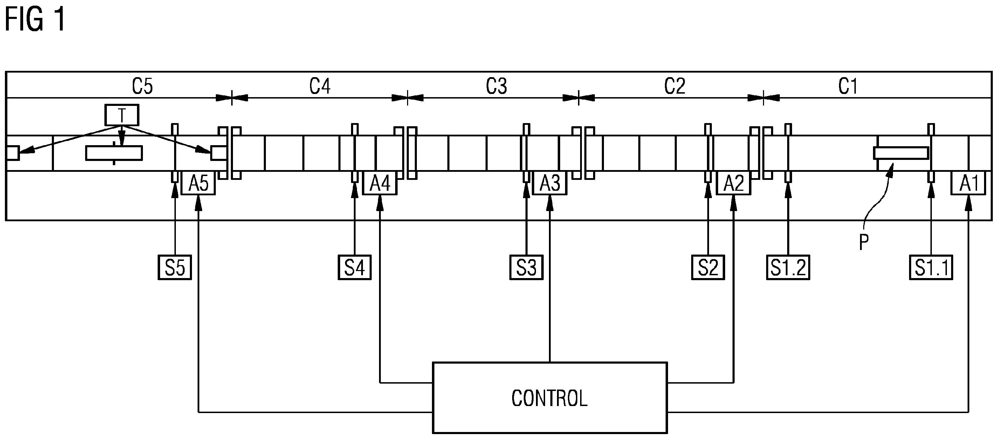

In der Intralogistik oder allgemein im Produktionsumfeld werden oftmals Förderstrecken mit mehreren einzeln ansteuerbaren Förderbandabschnitten verwendet. Figur 1 zeigt eine solche Förderstrecke, welche z.B. für eine Verpackungsmaschine genutzt werden kann. Hier müssen Produkte auf der Förderstrecke beschleunigt / abgebremst werden, um das Produkt passend zur Taktfrequenz einer nicht dargestellten Schlauchbeutelmaschine am Ende der Förderstrecke anzuliefern. In der Darstellung wird das Produkt P von rechts kommend von den Teilförderstrecken in Form der Förder- oder Fließbänder C1, C2, C3, C4, C5 nach links transportiert. Bei dem Produkt P handelt es sich um ein an sich beliebiges Stückgut. Die Förderbänder C1, C2, C3, C4, C5 können gleich lang sein oder unterschiedliche Längen aufweisen.

Jedem der Förderbänder C1, C2, C3, C4, C5 ist jeweils ein Antrieb A1, A2, A3, A4, A5 zugeordnet. Durch entsprechende Ansteuerung der Antriebe A1, A2, A3, A4, A5 mittels einer Steuereinheit CONTROL, illustriert durch die die Ansteuersignale symbolisierenden Pfeile von der Steuereinheit CONTROL zu dem jeweiligen Antrieb A1, A2, A3, A4, A5, können die Förderbänder C1, C2, C3, C4, C5 individuell beschleunigt oder verzögert werden. Das Ziel dieser individuellen Bewegungskontrolle der Förderbänder C1, C2, C3, C4, C5 ist es, das Produkt auf einen bestimmten Zielort T auf dem letzten Förderband C5 zu platzieren. Die Zufuhr der Stückgüter auf die Förderstrecke erfolgt über das als Übergabeeinheit fungierende Förderband C1, welches wie dargestellt auch als Teilförderstrecke ausgebildet ist. Im Allgemeinen liegt somit zufällig, sowohl in Bezug auf die Zeitpunkte als auch auf die Größe, hereinkommendes Stückgut vor, welche auf vorgegebene Positionen abzulegen ist.

Um die Steuereinheit CONTROL in die Lage zu versetzen, geeignete Ansteuersignale zum Beschleunigen und Verzögern der Antriebe A1, A2, A3, A4, A5 zu generieren, sind die Förderbänder C1, C2, C3, C4, C5 mit Sensoren versehen. Im Beispiel der Figur 1 sind die Sensoren S1.1, S1.2, S2, S3, S4, S5 dabei wie folgt verteilt: das erste Förderband C1 besitzt zwei Sensoren, den Sensor S1.1 am Anfang und den Sensor S1.2 am Ende, alle anderen Förderbänder haben jeweils einen Sensor S2, S3, S4 und S5. Die Sensoren können z.B. nicht direkt am Beginn / Ende der einzelnen Förderbänder positioniert sein, sondern einen kleinen Abstand zum Förderbandbeginn haben; im Allgemeinen können diese jedoch an sich beliebigen Positionen angebracht sein. Es ist auch nicht nötig, dass jedes Förderband mit einem oder mehreren Sensoren versehen ist. Bei den Sensoren S1.1, S1.2, S2, S3, S4, S5 handelt es sich um Lichtschranken. Diese geben die binären Werte LOW und HIGH aus, wobei LOW bedeutet, dass sich ein Produkt in der Lichtschranke befindet. Ferner können weitere Sensoren zur Ermittlung der Geschwindigkeiten der Förderbänder C1, C2, C3, C4, C5 vorgesehen sein, wie z.B. Drehzahlsensoren zur Detektion der Drehzahl der Antriebe A1, A2, A3, A4, A5, Stromsensoren zur Detektion von Motorströmen der Antriebe A1, A2, A3, A4, A5, usw. Alternativ können die Geschwindigkeiten der Förderbänder C1, C2, C3, C4, C5 als aus den Ansteuersignalen der Steuereinheit CONTROL bekannt vorausgesetzt werden.

Bei der in Figur 1 dargestellten Förderstrecke handelt es sich um ein einfaches Beispiel. Komplexere Förderstrecken umfassen mehrere Finger, die wiederum mehrere hintereinander geschaltete Förderbänder beinhalten. Jeder Finger einer solchen komplexeren Förderstrecke ist also im Prinzip wie in Figur 1 dargestellt aufgebaut. Förderstrecken mit mehreren Fingern werden z.B. in Paketsortieranlagen zur Vereinzelung von Paketen unterschiedlicher oder gleicher Größen eingesetzt. Ein anderes Beispiel stellt eine Verpackungsmaschine dar, bei der die zu verpackenden Produkte auf einer Förderstrecke beschleunigt / abgebremst werden müssen, um das Produkt passend zur Taktfrequenz der Schlauchbeutelmaschine am Ende der Förderstrecke anzuliefern. Ein konkretes Beispiel für eine komplexere Förderstrecke ist ein so genannter "Dynamic Gapper", eine geregelte Antriebsapplikation, die neuerdings in der Intralogistik genutzt wird.

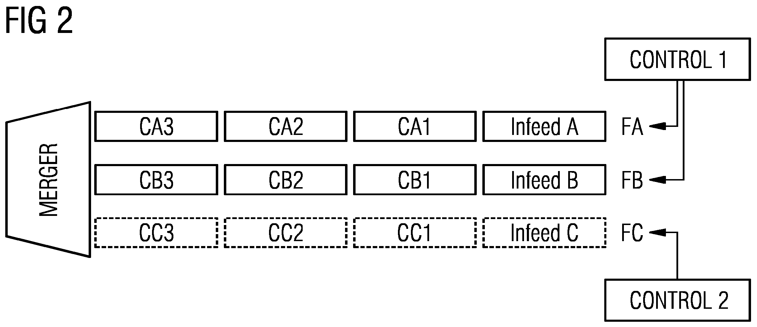

Figur 2 zeigt eine mehrere Finger aufweisende Förderstrecke. Sie umfasst beispielhaft drei parallel zueinander verlaufende Förderstrecken FA, FB, FC, auf denen jeweils in einer von rechts nach links verlaufenden Förderrichtung Produkte wie z.B. Pakete befördert werden können. Jede der Förderstrecken FA, FB, FC umfasst eine Mehrzahl an Förderbändern Infeed A, CA1, CA2, CA3, Infeed B, CB1, CB2, CB3, Infeed C, CC1, CC2, CC3. Die Anzahl an Förderbändern pro Förderstrecke FA, FB, FC ist im vorliegenden Ausführungsbeispiel gleich, wobei dies jedoch nicht zwingend ist. Die Förderbänder jeder Förderstrecke FA, FB, FC können gleich lang sein oder unterschiedliche Längen aufweisen. Der Übersichtlichkeit halber sind Sensoren und Antriebe nicht dargestellt.

Ein Produkt gelangt auf dem jeweils ersten Förderband Infeed A, Infeed B, Infeed C auf die Förderstrecke FA, FB, FC. Am Ende der Förderstrecken FA, FB, FC ist die Vereinigungseinheit MERGER angeordnet, auf welche die in Förderrichtung letzten Förderbänder CA3, CB3, CC3 die von ihnen transportierten Produkte übergeben. An einem Ausgang der Vereinigungseinheit befindet sich eine einzige Ausgangsförderstrecke. Auf diesem ausgehenden Förderband ist der Produktfluss zusammengeführt.

Die individuelle Beschleunigung und Verzögerung der Förderbänder der Finger ermöglicht es, auf den verschiedenen Fingern transportierte Produkte je nach Bedarf, z.B. zeitlich versetzt, auf die Vereinigungseinheit MERGER zu transportieren. Die Vereinigungseinheit MERGER ist dadurch in die Lage versetzt, ein Produkt auf die Ausgangsförderstrecke derart zu fördern, dass jeweils zwei zeitlich aufeinanderfolgende Produkte einen vorgegebenen definierten Mindestabstand zueinander aufweisen. Alternativ ist es auch möglich, dass zwei oder mehr Produkte verschiedener Förderstrecken FA, FB, FC gleichzeitig auf die Ausgangsförderstrecke transportiert werden sollen, z.B. weil sie gemeinsam zu verpacken sind.

Im Folgenden wird die Situation betrachtet, dass zu einer bestehenden Anlage in Form der Förderstrecken FA und FB ein weiterer Zuführarm in Form der Förderstrecke FC hinzugefügt wird. Die Förderstrecken FA und FB werden bereits von der Steuereinheit CONTROL 1 gesteuert. Das vorliegende Problem liegt also in der Erweiterung laufender Förderstrecken, dem sogenannten Retro-Fitting.

Das Ziel der Erweiterung kann sein, den Produktdurchsatz zu erhöhen. Dafür sollen Produktlücken auf der Vereinigungseinheit MERGER durch die Anlagen-Erweiterung geschickt ausgenutzt werden, indem die Produkte der neuen Förderstrecke FC genau dann auf die Vereinigungseinheit MERGER übergeben werden, wenn sich eine Lücke auftut. Hierdurch wird der Produktdurchsatz gesteigert. Eine andere Zielsetzung kann sein, dass die Produkte der neuen Förderstrecke FC mit einem Produkt einer bestehenden Förderstrecke FA und/oder FB gemeinsam verpackt werden, also gleichzeitig mit diesem auf der Vereinigungseinheit MERGER ankommen sollen.

Die Bestimmung der optimalen Geschwindigkeiten der einzelnen Förderbänder des Fingers FC erfolgt mittels der Steuereinheit CONTROL 2. Die Erreichung der oben genannten Ziele, z.B. die Erhöhung des Produktdurchsatzes, setzt in die Zukunft gehendes planerisches Handeln voraus, wofür eine Abschätzung über die Anzahl, Größen und Positionen der Lücken benötigt wird. Die Steuereinheit CONTROL 2 soll zu jedem Zeitpunkt und in jeder beliebigen Situation, was die Anzahl, Größen und Positionen der einzelnen Produkte auf den Förderstrecken FA, FB, FC anbetrifft, optimale Geschwindigkeiten für die Förderbänder der Förderstrecke FC bestimmen. Wichtig ist, dass der Steuereinheit CONTROL 2 hierfür kein physikalisches Modell, z.B. in Form einer Simulation, der zu erweiternden Anlage vorliegt.

Der Grund für die mangelnde Detailkenntnis bezüglich der Gegebenheiten der zu erweiternden Anlage kann z.B. darin liegen, dass dies ein Betriebsgeheimnis des Anlagenbauers der zu erweiternden Anlage darstellt. Der Verzicht auf Kenntnisse bzgl. der bestehenden Anlage ermöglicht es, dass eine Anlage eines ersten Herstellers, welche von einer ersten Steuereinheit CONTROL 1 gesteuert wird, zur Steigerung der Produktivität um einen Finger eines anderen Herstellers erweitert werden kann, welcher dann von einer zweiten Steuereinheit CONTROL 2 gesteuert wird.

Die zweite Steuereinheit CONTROL 2 kennt den Steueralgorithmus der ersten Steuereinheit CONTROL 1 nicht. Es wird lediglich vorausgesetzt, dass die erste Steuereinheit CONTROL 1 der bestehenden Anlage deterministisch vorgeht. D.h. unter gleichen Umständen erfolgt die Bestimmung der Geschwindigkeiten für die Förderstrecken FA, FB auf gleiche Weise, ohne Zufallsaspekte. Es wird von der zweiten Steuereinheit CONTROL 2 kein Zugang zur ersten Steuereinheit CONTROL 1 der Ursprungsanlage benötigt, bzw. kein Expertenwissen über die Steuerung der Ursprungsanlage. Eine Erweiterung einer existierenden Anlage um ein weiteres Förderband ist mittels des beschriebenen Vorgehens deshalb nicht nur für dessen ursprünglichen Erbauer möglich.

Voraussetzung ist, dass Betriebsdaten über das Verhalten der bestehenden Anlage zur Verfügung gestellt werden. Hierbei handelt es sich um die Lichtschrankensignale und die Förderband-Geschwindigkeiten der Förderstrecken FA und FB. Bei den Förderband-Geschwindigkeiten handelt es sich um die tatsächlich vorliegenden Geschwindigkeiten. Diese können leicht zeitversetzt zu den Vorgabegeschwindigkeiten der erste Steuereinheit CONTROL 1 sein. Zusätzlich können als Betriebsdaten auch diese Vorgabegeschwindigkeiten der ersten Steuereinheit CONTROL 1 verfügbar sein. Es wird angenommen, dass die Betriebsdaten der bestehenden Anlage aufgezeichnet werden und ferner, dass diese in einem geeigneten zeitlichen Grid von z.B. 4 ms vorliegen. Es liegt also eine Reihe zeitlich aufeinanderfolgende Datensätze der bestehenden Anlage vor, wobei jeder Datensatz die Betriebsdaten des jeweiligen Zeitpunktes enthält. Diese Betriebsdaten eines Zeitpunktes zeigen an, welche Werte die Lichtschrankensignale der Förderstrecken FA und FB zu diesem Zeitpunkt gemessen haben und welche Geschwindigkeiten die Förderbänder der Förderstrecken FA und FB zu diesem Zeitpunkt hatten.

Im Folgenden wird erläutert, wie die Realisierung der Steuerung der Förderstrecke FC unter Verwendung von Künstlicher Intelligenz ermöglicht werden kann. Hierzu wird ein Maschinenlernmodell (im folgenden ML-Modell) trainiert, welches danach als Bestandteil der Steuereinheit CONTROL 2 im tatsächlichen Betrieb der Förderstrecke die Bewegungskontrolle der Förderstrecke FC übernimmt. Trainieren lassen sich insbesondere künstliche neuronale Netze, rekurrente neuronale Netze, faltende neuronale Netze, Perzeptrone, bayessche neuronale Netze, Autoencoder, variationale Autoencoder, Gaußprozesse, Deep-Learning-Architekturen, Support-Vektor-Maschinen, datengetriebene Regressionsmodelle, k-nächste-Nachbarn-Klassifikatoren, physikalische Modelle und/oder Entscheidungsbäume. Als Trainingsmethode eignen sich insbesondere Methoden aus dem Bereich des Reinforcement Learnings, zum Beispiel Policy-Gradienten-Verfahren.

Bevor die zweite Steuereinheit CONTROL 2 die Förderstrecke FC mittels des ML-Modells steuern kann, muss dieses trainiert werden. Diesem Training vorgelagert soll eine Abschätzung erarbeitet werden, wann auf der Vereinigungseinheit MERGER eine Lücke entstehen wird. Dies kann durch das Erlernen eines Prognose-Modells für die zeitlich erwartete Aktivierung einer ausgehenden Lichtschranke geschehen. Diese ausgehende Lichtschranke ist an der Vereinigungseinheit MERGER angebracht, kann sich alternativ, aber auch kurz vor der Vereinigungseinheit MERGER befinden. Sie zeigt somit direkt an, wann ein Produkt einer bestimmten Länge auf der Vereinigungseinheit MERGER angekommen ist bzw. die Vereinigungseinheit MERGER in Kürze erreichen wird. Sie ist nicht steuerungsrelevant, erfasst also nur das Eintreffen von Produkten auf der Vereinigungseinheit MERGER, ohne dass ihre Signale der Steuerung durch die erste Steuereinheit CONTROL 1 zugrunde gelegt werden.

Anstelle der Verwendung des Signals einer tatsächlich vorhandenen ausgehenden Lichtschranke kann auch eine virtuelle Lichtschranke zum Einsatz kommen. In diesem Fall wird eine Position, z.B. am Ende der Vereinigungseinheit MERGER, betrachtet und berechnet, wann ein Produkt diese Position erreicht. Bei einer virtuellen Lichtschranke werden Produktpositionen bis zu dieser Position auf dem Förderband verfolgt. Diese Berechnung kann durch Aufintegration der Geschwindigkeiten der Förderbänder ab der letzten reellen Lichtschranke erfolgen. Auf diese Weise wird also die Aktivierung eines spezifischen Punktes auf der Vereinigungseinheit MERGER rechnerisch bestimmt.

Das Prognose-Modell ist nicht Teil des ML-Modells, sondern ein von dem ML-Modell unabhängiges Modell, dessen Prognoseergebnisse dem ML-Modell zur Verfügung gestellt werden. Auch das Prognose-Modell kann auf Maschinenlernen basieren. Alternativ kann es sich bei dem Prognose-Modell um ein physikalisches Modell handeln, welches ausgehend von den Geschwindigkeiten der Förderbänder und den Lichtschrankensignalen basierend auf physikalischen Gleichungen (bestenfalls unter Berücksichtigung von Reibung bei den Übergängen zwischen den einzelnen Förderbändern) berechnet, wann das Produkt an der ausgehenden Lichtschranke eintreffen wird.

Zur Erstellung des Prognose-Modells stehen die Betriebsdaten zur Verfügung, also die Lichtschrankensignale und Förderband-geschwindigkeiten zum aktuellen Zeitpunkt sowie für eine bestimmte Anzahl von vorhergehenden Zeitschritten. Ziel des Prognose-Modells ist es, bei einem beliebigen Zustand vorherzusagen, wann die ausgehende Lichtschranke getriggert wird. Hierzu wird zunächst in den historischen Betriebsdaten betrachtet, zu welchen Zeitpunkten ein Produkt die ausgehende Lichtschranke beginnt zu passieren, d.h. wann der Zustands-übergang von HIGH zu LOW bei dieser Lichtschranke stattfand. Wenn eine reale Lichtschranke vorhanden ist, kann dies direkt aus den Betriebsdaten entnommen werden. Ansonsten erfolgt wie erläutert eine rechnerische Bestimmung dieser Zeitpunkte.

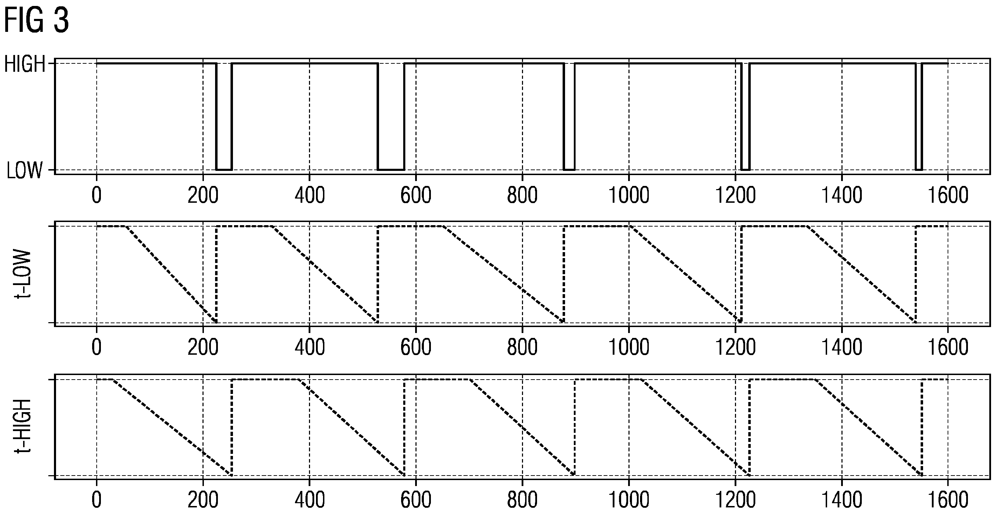

Figur 3 zeigt in der oberen Grafik den Verlauf der Messwerte der ausgehenden Lichtschranke. Auf der Abszisse ist hierbei die Zeit in Zeitscheiben aufgetragen. Hierbei ist eine Zeitscheibe der Abstand zwischen zwei benachbarten Datensätzen mit Betriebsdaten. Zu den Zeiten, wo das Signal auf LOW steht - also nach unten gesprungen ist -, passiert ein Produkt die Lichtschranke. Umgekehrt befindet sich kein Produkt in der Lichtschranke, wenn das Signal HIGH anzeigt. Ausgehend von diesen in der obersten Grafik gezeigten Betriebsdaten der ausgehenden Lichtschranke werden nun rückwärtsgerichtet für alle vorhergehenden Zustände die Anzahl an Zeitscheiben bis zum Signalwechsel bestimmt und der jeweiligen Zeitscheibe zugeordnet. Diese Zuordnung ist in den unteren beiden Grafiken gezeigt.

Die unterste Grafik zeigt die Anzahl an noch zu vergehenden Zeitschritten t-LOW an, bis die Lichtschranke vom Zustand HIGH auf LOW wechselt. Die maximale Anzahl an zu vergehenden Zeitschritten ist dabei auf ein Maximum von 200 Schritten gedeckelt, was einem Prognosehorizont von ca. 800 ms entspricht, falls eine Zeitscheibe die Länge 4 ms besitzt. Dies erklärt den teilweise horizontalen Verlauf des Wertes t-LOW.

Die mittlere Grafik zeigt die Anzahl an noch zu vergehenden Zeitschritten t-HIGH an, bis die Lichtschranke vom Zustand LOW auf HIGH wechselt. Bezüglich der Deckelung gilt das gleiche wie für den Verlauf von t-LOW

Es werden also zum Zwecke des Erlernens des Prognose-Modells die Lichtschrankensignale der historischen Betriebsdaten in Sägezahnfunktionen umgewandelt. Eine erste Sägezahnfunktion, dargestellt in der untersten Grafik, gibt die Anzahl an noch zu vergehenden Zeitscheiben an, bis an der ausgehenden Lichtschranke eine fallende Flanke zum Zustand LOW führt, also ein Produkt die Lichtschranke erreicht hat. Eine zweite Sägezahnfunktion, dargestellt in der mittleren Grafik, gibt die zu erwartenden Zeitschritte bis zur nächsten steigenden Flanke an, an welcher das Zustandssignal der Lichtschranke in den Status HIGH wechselt, also ein Produkt die Lichtschranke wieder verlässt.

Zur Erstellung des Prognose-Modells werden die erhaltenen Betriebsdaten um diese ermittelten Sägezahnfunktionen angereichert. Jeder Datensatz beinhaltet somit für einen bestimmten Zeitpunkt insgesamt für jede der Lichtschranken, nicht nur für die ausgehende Lichtschranke, den jeweiligen Messwert, sowie für jedes Förderband die aktuelle Geschwindigkeit, und zusätzlich den jeweiligen Wert der Sägezahnfunktionen. Hierdurch kann für jeden Zustand des bestehenden Systems eine Prognose erlernt werden, wie viele Zeitschritte erwartungsgemäß vergehen werden, bis die ausgehende Lichtschranke das nächste Mal getriggert wird und nach wie vielen Zeitschritten das jeweilige Produkt die ausgehende Lichtschranke wieder verlässt. Das erlernte Prognose-Modell für Produktlücken bestimmt also ausgehend von den Förderbandgeschwindigkeiten und Sensor-Informationen aller Förderbänder für die nachfolgenden Zeitschritte, wann voraussichtlich eine Lücke an der echten oder virtuellen Position der ausgehenden Lichtschranke auf der Vereinigungseinheit MERGER entstehen wird. Dies entspricht somit einer Vorhersage von Zeitpunkten und Längen von zu erwartenden Lücken auf der Vereinigungseinheit MERGER.

Die zweite Sägezahnfunktion, welche mit dem Verlassen der Lichtschranke verknüpft ist, ist insbesondere dann sinnvoll, wenn die Produkte verschiedene Längen haben. Wenn hingegen nur Produkte gleicher Länge betrachtet werden, reicht auch die Verwendung der ersten Sägezahnfunktion.

Nach Erstellen des Prognose-Modells für Produktlücken sollen diese Produktlücken zum Platzieren weiterer Produkte genutzt werden. Dieses Platzieren trainiert das ML-Modell mit Hilfe des Prognose-Modells. Es kann mittels eines Optimierungsverfahrens, wie z.B. mit einem Reinforcement-Learning-Algorithmus, eine Strategie lernen, welche die Geschwindigkeiten der Förderbänder auf dem neuen Finger so einstellt, dass ein Produkt von diesem neuen Finger genau in der prognostizierten Lücke auf der Vereinigungseinheit MERGER landet. Als Eingangsdaten für das Training erhält das ML-Modell den Output des Prognose-Modells, ergänzt um berechnete Betriebsdaten des neuen Fingers, welche sich aus den vom ML-Modell durchgeführten Aktionen ergeben. Zur Berechnung des jeweiligen Output Wertes empfängt das Prognose-Modell historische Betriebsdaten der bestehenden Anlage, also für jede Zeitscheibe die Messergebnisse der Lichtschranken und die jeweils aktuellen Geschwindigkeiten. Bei diesen historischen Betriebsdaten kann es sich um die gleichen Daten handeln, welche zur Erstellung des Prognose-Modells verwendet wurden, oder auch um andere historische Betriebsdaten der bestehenden Anlage. Der Output Wert des Prognose-Modells ist eine Zeit, welche angibt, wann das nächste Produkt die ausgehende Lichtschranke erreichen wird. Vorteilhaft ist es, wenn der Output Wert des Prognose-Modells zusätzlich zur Zeit des Erreichens der ausgehenden Lichtschranke auch diejenige des Verlassens der ausgehenden Lichtschranke enthält. Dies ist sinnvoll bei Produkten verschiedener Längen und erlaubt dem ML-Modell das Einhalten von bestimmten Abständen zwischen benachbarten Produkten. Das ML-Modell empfängt somit bei dem Training für jede Zeitscheibe den aktuellen Output Wert des Prognose-Modells, basierend auf historischen Betriebsdaten der bestehenden Anlage, sowie aus einer Simulation die entsprechenden Betriebsdaten des neuen Fingers, also die jeweiligen Messergebnisse der Lichtschranken und die aktuellen Geschwindigkeiten.

Das Training mit einem Reinforcement-Learning-Algorithmus bedarf einer entsprechend gewählten Kostenfunktion, auch Reward-Funktion genannt: vorzugsweise besteht die Lernaufgabe darin, Produkte auf der Vereinigungseinheit MERGER zu vereinzeln und den Durchsatz zu maximieren. Die Reward-Funktion kann in diesem Fall so definiert werden, dass ein hoher Reward erzielt wird, wenn der Durchsatz hoch ist, d.h. ein Produkt von dem letzten Förderband des neuen Fingers auf die Vereinigungseinheit MERGER übergegangen ist, und gleichzeitig zum vorherigen Produkt ein Mindestabstand eingehalten wurde. Analog wird ein negativer Reward erhalten, wenn der Abstand zwischen zwei passierenden Produkten auf der Vereinigungseinheit MERGER zu gering ist bzw. es eine Kollision auf der Vereinigungseinheit MERGER gab.

Nach Abschluss des Trainings wird das ML-Modell in der zweiten Steuereinheit CONTROL 2 zur tatsächlichen Steuerung der Bewegung der Förderbänder eingesetzt. Hierbei bestimmt das ML-Modell die Geschwindigkeiten der Förderbänder des hinzugefügten Fingers so, dass das im Training vorgegebene Ziel erreicht wird. Hierzu erhält das Prognose-Modell als Eingangsdaten die gleichen Betriebsdaten, welche zum Erlernen des Prognose-Modells zur Verfügung gestellt wurden. D.h. dem Prognose-Modell werden im tatsächlichen Betrieb mit einer zeitlichen Taktung, welche den Zeitscheiben der historischen Daten entspricht, die aktuellen Geschwindigkeiten der Förderbänder und die aktuellen Messwerte der Lichtschranken der von der ersten Steuereinheit CONTROL 1 gesteuerten Förderstrecken geliefert. Hieraus bestimmt das Prognose-Modell den Output Wert, welcher für jede Zeitscheibe angibt, wann voraussichtlich das nächste Produkt die ausgehende Lichtschranke erreichen wird, und gegebenenfalls auch, wann es sie wieder verlassen wird. Das ML-Modell erhält pro Zeitscheibe diesen Output-Wert des Prognose-Modells, und zusätzlich auch die entsprechenden Betriebsdaten des von ihm gesteuerten neuen Fingers.

Der beschriebene Einsatz eines ML-Modells zum Retrofitting einer Förderstrecke weist mehrere Vorteile auf:
Es können optimale Steuerungen für erweiterte Förderanlagen bestimmt werden, ohne ein abgestimmtes neues Gesamtsystem zu benötigen. Hierdurch können insbesondere auch Anlagen von Wettbewerbern nachgerüstet werden. Herkömmliche virtuelle Inbetriebnahme Methoden, welche auf physikalischen Modellen und konventionellen, nicht KI-basierten Steuerungen basieren, können in diesem Fall nicht eingesetzt werden, da die nötigen Daten bei fremden Anlagen nicht vorliegen. Das Vorgehen kann sowohl für Anlagen eines einzigen Herstellers als auch für Anlagen von Wettbewerbern eingesetzt werden, ohne dass das Steuerprogramm der bestehenden Anlage bekannt sein muss. Diese muss lediglich beobachtbar sein.

Ferner kann durch das Erstellen des Prognose-Modells mittels historischer Betriebsdaten, also das rein datenbasierte Lernen, der Entwicklungsaufwand zur Erstellung eines Simulationsmodells eingespart werden. Es muss somit kein physikalisches Modell oder physikalische Erläuterungen der bestehenden Anlage zur Verfügung gestellt werden.

Die Anzahl der Steuergrößen, also die einzustellenden Geschwindigkeiten der Förderbänder, für den Retro-Fit-Arm ist deutlich geringer gegenüber einer Steuerung des Gesamtsystems aus bestehenden Förderstrecken und dem neuen Arm. Dies beschleunigt Trainings- und Optimierungszeiten, da der Suchraum für optimale Steuerungen deutlich reduzierter ist.

Während das geschilderte Beispiel eine bestehende Anlage mit zwei Fingern und einem hinzuzufügenden Finger betraf, kann das Vorgehen auf eine beliebige Anzahl an Fingern angewandt werden. D.h. die Methode ist für eine beliebige Anzahl an existierenden und neuen Zuführarmen einsetzbar. Wenn die Methode also programmiert wurde, kann sie ohne Aufwand auf jede beliebige Anlage mit Förderbändern angewendet werden. Die Übertragbarkeit dieser Methode macht sie skalierbar und damit vielfältig einsetzbar und preislich attraktiv.

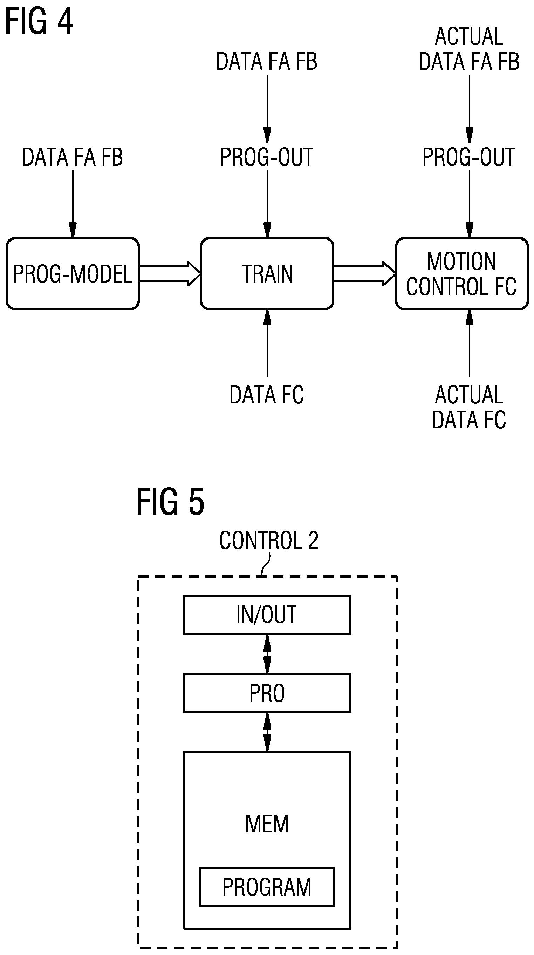

Zusammenfassend zeigt Figur 4 ein Ablaufdiagramm zu dem geschilderten Vorgehen. In einem ersten Schritt PROG-MODEL wird das Prognose-Modell erlernt, basierend auf den historischen Betriebsdaten DATA FA FB der bestehenden Förderstrecken FA und FB. Danach trainiert das ML-Modell unter Verwendung des Prognose-Modells die Steuerung der neuen Förderstrecke FC, wobei ihm hierzu eine Zielfunktion vorgegeben wird, welche sich aus den Anforderungen des tatsächlichen Betriebs der Anlage ergibt. Als Input für das Training wird der Output Wert PROG-OUT des Prognose-Modells, basierend auf historischen Betriebsdaten DATA FA FB der bestehenden Förderstrecken FA und FB, sowie errechnete Betriebsdaten DATA FC der vom ML-Modell zu steuernden Förderstrecke FC eingegeben. Im Anschluss erfolgt der tatsächliche Betrieb MOTION CONTROL FC, in welchem das trainierte ML-Modell die Steuerung der Förderstrecke FC übernimmt, indem Geschwindigkeiten für die Förderbänder der Förderstrecke FC ermittelt und vorgegeben werden. Hierzu erhält das ML-Modell den Output Wert PROG-OUT des Prognose-Modells, basierend auf den aktuellen Betriebsdaten ACTUAL DATA FA FB der nicht von ihm gesteuerten Förderstrecken FA und FB, sowie die aktuellen Betriebsdaten ACTUAL DATA FC der von ihm gesteuerten Förderstrecke FC.

Bislang wurde der Fall geschildert, dass es sich bei dem Prognose-Modell und dem ML-Modell um voneinander verschiedene Modelle handelt. Alternativ ist es auch möglich, dass das ML-Modell das Prognose-Modell umfasst. In diesem Fall empfängt das ML-Modell nicht den Output Wert des Prognose-Modells, sondern direkt die Betriebsdaten der bestehenden Förderstrecken.

Figur 5 zeigt, wie die Steuereinheit CONTROL 2 aufgebaut sein kann, welche das ML-Modell und vorzugsweise auch das Prognose-Modell implementiert. Während die im Folgenden näher erläuterten Bestandteile in der Figur einfach vorhanden sind, ist es auch möglich, dass diese in mehrfacher Ausführung vorhanden sind, z.B. als verteiltes System. Auf diese Weise kann die Funktionalität der Steuereinheit CONTROL 2 auf mehrere, gegebenenfalls hierarchisch miteinander verknüpfte, Systeme aufgeteilt werden. Dieses oder diese können sich in der Nähe der Förderstrecke oder an einem anderen Ort befinden.

Die Steuereinheit CONTROL 2 umfasst eine Recheneinheit bzw. einen Prozessor PRO. Dieser ist verbunden mit einem Speicher MEM, in welchem ein Computerprogramm PROGRAM abgelegt ist. Das Computerprogramm PROGRAM kann sowohl Prognose-Modell als auch das ML-Modell umfassen; alternativ können getrennte Programme für das Prognose-Modell und das ML-Modell vorliegen. Insbesondere in letzterem Fall können auch getrennte Speicher MEM zum Einsatz kommen. Es ist auch möglich, dass in der Steuereinheit CONTROL 2 nur das ML-Modell vorhanden ist, während das Prognose-Modell in einer anderen Einheit gespeichert und abgearbeitet wird.

Bei dem bzw. den Speicher(n) MEM handelt es sich vorzugsweise um ein nicht-flüchtiges computerlesbares Datenspeichermedium. Die Speicherung kann auf jegliche Weise erfolgen, welche geeignet ist, die Auslesbarkeit durch eine Recheneinheit zu gewährleisten, wie durch magnetische Speicherung, z.B. mittels Diskette, optische Speicherung, z.B. mittels CD, magneto-optische Speicherung, ROM (Read Only Memory) Speicherung, RAM (Random Access Memory) Speicherung, EPROM (Erasable Programmable Read-Only Memory), EEPROM (Electrically Erasable Programmable Read-Only Memory), Flash-Memory.

Durch Ausführen der Instruktionen des Programms PROGRAM in dem Prozessor PRO können die Schritte der oben erläuterten Vorgehensweise durchgeführt werden. Hierzu ist der Prozessor PRO mit einer Ein- und Ausgabeeinheit IN/OUT verbunden, über welche Informationen zwischen der Steuereinheit CONTROL 2 und anderen Komponenten und/oder einem Nutzer ausgetauscht werden können. Diese Schnittstelle kann hierbei auf geeignete Weise ausgestaltet sein, z.B. über Funk oder über Kabel, und die Kommunikation kann über geeignete Standards erfolgen.

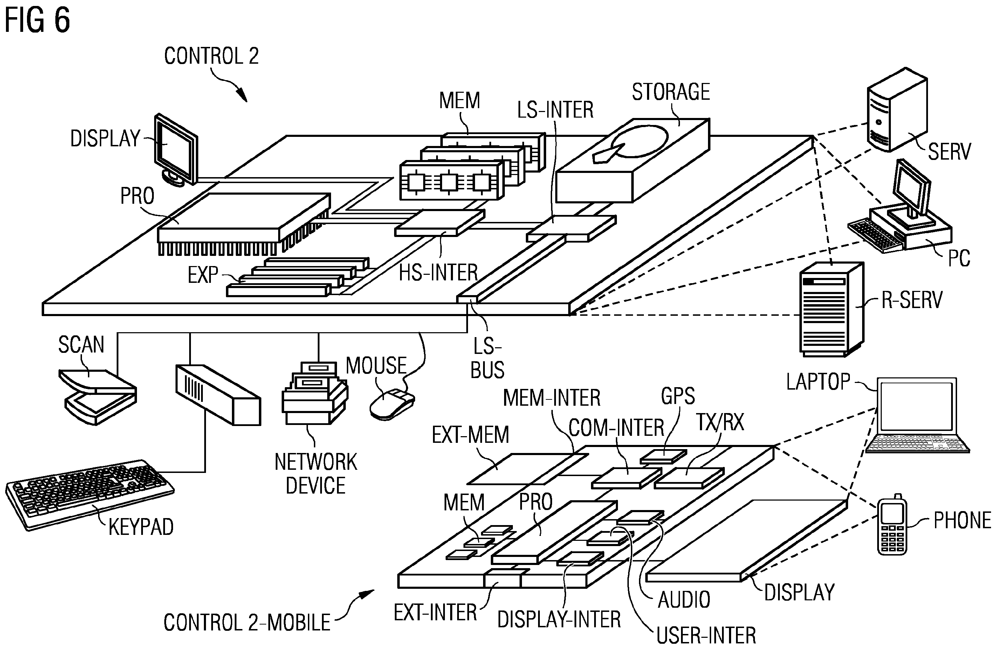

Figur 6 zeigt beispielhaft in größerem Detaillierungsgrad, wie die Steuereinheit CONTROL 2 der Figur 5 ausgestaltet sein kann: dies kann ein generischer Computer CONTROL 2 oder ein mobiler generischer Computer Steuereinheit CONTROL 2 -MOBILE sein. Hierbei repräsentiert der generischer Computer CONTROL 2 verschiedene Arten digitaler Computergeräte, so wie z.B. Desktopcomputer, Workstations, Server, Blade Server, Mainframes, oder andere geeignete Geräte. Der mobile generische Computer CONTROL 2 -MOBILE steht entsprechend für verschiedene Arten mobiler digitaler Computergeräte, so wie z.B. Laptops, PDAs, Mobiltelefone oder Smart Phones, oder andere geeignete Geräte. Wenn anhand von Figur 6 konkret und detailliert verwendbare Komponenten aufgezeigt und erläutert werden, ist dies beispielhaft zu verstehen; die Realisierung der Erfindung ist nicht auf diese Komponenten beschränkt.

Der Computer CONTROL 2 umfasst einen Prozessor PRO, einen Speicher MEM, und dazwischen ein Hochgeschwindigkeits-Interface HS-INTER. Ferner sind Hochgeschwindigkeits-Expansion Ports EXP und ein Low-speed-Interface LS-INTER an das Hochgeschwindigkeits-Interface HS-INTER angeschlossen. An das Low-speed-Interface LS-INTER sind das Speichergerät STORAGE und der Low-speed Bus LS-BUS angeschlossen. Die Komponenten PRO, MEM, STORAGE, HS-INTER, EXP, LS-INTER sind über geeignete Verbindungen/Busse verbunden, und können auf einem gemeinsamen Motherboard montiert sein.

Während in Figur 6 die Komponenten des Computers CONTROL 2 in einfacher Ausführung dargestellt sind, ist es auch möglich, manche oder alle dieser Komponenten mehrfach vorzusehen. Auch kann der Computer CONTROL 2 mehrere miteinander verbundene Computer umfassen, welche sich gegebenenfalls an verschiedenen Orten befinden.

Der Prozessor PRO kann Instruktionen verarbeiten, die im Computer CONTROL 2 ausgeführt werden sollen, wobei die Instruktionen insbesondere im Speicher MEM oder im Speichergerät STORAGE gespeichert sein können. Informationen, insbesondere Ergebnisse der Verarbeitung im Prozessor PRO, können mittels einer GUI auf einer an das Hochgeschwindigkeits-Interface HS-INTER angeschlossene Anzeige wie dem Bildschirm DISPLAY grafisch ausgegeben werden.

Der Speicher MEM dient der Speicherung von Informationen innerhalb des Computers CONTROL 2. Hierbei kann es sich um einen flüchtigen Speicher oder einen nicht-flüchtigen Speicher handeln. Er kann mehrere Speicherzellen umfassen. Bei dem Speichergerät STORAGE handelt es sich vorzugsweise um ein Massenspeichergerät für ein computerlesbares Medium. Hierzu kann es z.B. ein Diskettenlaufwerk, eine Festplatte, ein Laufwerk für optische Speicherplatten, ein Bandgerät, ein Flash Memory-Speichergerät, oder auch eine Reihe von Geräten, z.B. in einer Storage Area Networks Konfiguration, umfassen.

Das Hochgeschwindigkeits-Interface HS-INTER ist zuständig für Bandbreiten-intensive Vorgänge innerhalb des Computers CONTROL 2, während das Low-speed-Interface LS-INTER für solche mit geringerem Bandbreitenbedarf verwendet wird. Hierzu ist das Hochgeschwindigkeits-Interface HS-INTER verbunden mit dem Speicher MEM, dem Bildschirm DISPLAY, gegebenenfalls über einen Grafikprozessor, den Hochgeschwindigkeits-Expansion Ports EXP, welche diverse Erweiterungskarten aufnehmen können. An das Low-speed-Interface LS-INTER angebunden sind das Speichergerät STORAGE und der Low-speed Bus LS-BUS, an welchem sich Low-Speed-Expansion Ports befinden können. Letztere können verschiedene Kommunikationsanschlüsse aufweisen, z.B. USB, Bluetooth, Ethernet, drahtloses Ethernet. An diese können diverse Ein- und/oder Ausgabevorrichtungen angeschlossen sein, z.B. eine Tastatur KEYPAD, eine Maus MOUSE, ein Scanner SCAN, ein Netzwerkgerät NETWORK DEVICE wie ein Switch oder ein Router. Diese Aufgabenverteilung zwischen den beiden Interfaces HS-INTER und LS-INTER ist beispielhaft und kann auch anders organisiert sein.

Der Computer CONTROL 2 kann auf verschiedene Arten implementiert sein, wie am rechten Rand der Figur zu sehen ist. Z.B. kann er implementiert sein als ein Personal Computer PC, als ein Standard-Server SERV, oder auch als eine Gruppe solcher Sever wie z.B. eine Serverfarm, oder als ein Rack-Server-System R-SERV oder Bestanteil eines solchen Systems.

Der mobile Computer CONTROL 2 -MOBILE umfasst einen Prozessor PRO, einen Speicher MEM, eine Ein- und Ausgabevorrichtung DISPLAY, ein Kommunikations-Interface COM-INTER, einen Transceiver TX/RX. Die Komponenten PRO, MEM, COM-INTER, TX/RX sind über geeignete Verbindungen/Busse verbunden, und können auf einem gemeinsamen Motherboard oder in anderer geeigneter Weise montiert sein. Ferner kann eine weitere Speichereinrichtung, wie z.B. ein Mikrodrive o.ä., vorgesehen sein, um weitere Speicherungsmöglichkeiten zu schaffen.

Der Prozessor PRO kann Instruktionen innerhalb des mobilen Computers CONTROL 2 -MOBILE ausführen, insbesondere solche, die im Speicher MEM abgelegt sind. Er kann als Chip oder Chipset implementiert sein, welcher eine oder mehrere analoge oder digitale Prozesseinheiten enthält. Zuständig kann der Prozessor PRO u.a. sein für die Koordination der anderen Komponenten des mobilen Computers CONTROL 2 -MOBILE, so z.B. für die Steuerung der Benutzerschnittstelle(n), für Applikationen, welche auf dem mobilen Computers CONTROL 2 -MOBILE laufen, und für die drahtlose Kommunikation des mobilen Computers CONTROL 2 - MOBILE. Zwischen dem Nutzer des mobilen Computers CONTROL 2 - MOBILE und dem Prozessor PRO findet eine Informationsübertragung statt über das Nutzer-Interface USER-INTER, beispielsweise über Sprach- Ein/Ausgabe, sowie über das Display-Interface DISPLAY-INTER, beispielsweise über Text- Ein/Ausgabe. Die Ein- und Ausgabevorrichtung DISPLAY kann z.B. auf der TFT LCD (Thin-Film-Transistor Liquid Crystal Display) oder der OLED (Organic Light Emitting Diode) Technologie basieren.

Ferner ist ein an den Prozessor PRO angebundenes externes Interface EXT-INT vorgesehen, über welches eine Nahfeldkommunikation des mobilen Computers CONTROL 2 -MOBILE mit anderen Geräten möglich ist. Über das externe Interface EXT-INT kann drahtgebunden und/oder über Funk kommuniziert werden.

Der Speicher MEM dient der Speicherung von Informationen innerhalb des mobilen Computers CONTROL 2 -MOBILE und kann hierzu z.B. als flüchtiger oder nicht-flüchtiger Speicher umfassend eine oder mehrere Speichereinheiten implementiert sein. Zusätzlich kann ein Erweiterungsspeicher EXT-MEM vorgesehen sein, welches mit dem mobilen Computer CONTROL 2 -MOBILE über das Erweiterungs-Interface MEM-INTER verbunden ist, z.B. eine Schnittstelle für ein SIMM (Single In Line Memory Module) oder ein SIM (Subscriber Identity Module). Der Erweiterungsspeicher EXT-MEM bietet zusätzliche Speicherkapazität für den mobilen Computer CONTROL 2 -MOBILE und kann auch diverse Applikationen speichern. Z.B. kann der Erweiterungsspeicher EXT-MEM als Sicherheitsmodul für den mobilen Computer CONTROL 2 -MOBILE dienen, indem Identifikationsinformationen dort abgelegt werden.

Der mobile Computer CONTROL 2 -MOBILE kann drahtlos über den Transceiver TX/RX kommunizieren, welcher hierzu über Mittel zur digitalen Signalverarbeitung verfügt. Das Kommunikations-Interface COM-INTER ermöglicht die Kommunikation über geeignete Protokolle, wie z.B. GSM, SMS, MMS, CDMA, TDMA, PDC, WCDMA, CDMA2000, GPRS, EDGE, UMTS, LTE, sowie Kommunikationsprotokolle der 5ten oder höherer Generationen. Zusätzlich zum hierfür verwendeten Transceiver TX/RX kann ein nicht dargestellter Transceiver für Nahfeldkommunikation wie z.B. Bluetooth, WiFi o.ä. vorgesehen sein. Schließlich kann auch ein GPS-Modul GPS vorgesehen sein, um ortsbezogene Dienste verwenden zu können. Mittels des Audio-Codec AUDIO können empfangene Audioinformationen, welche insbesondere Instruktionen eines Nutzers umfassen können, in vom mobilen Computer CONTROL 2 -MOBILE verarbeitbare digitale Informationen umgewandelt werden; entsprechend können unter Verwendung des Audio-Codec AUDIO vom Nutzer erfassbare Klanginformationen generiert werden.

Wie auf der rechten Seite der Figur zu sehen, ist der mobile Computer CONTROL 2 -MOBILE vorzugsweise als Smartphone PHONE oder Laptop LAPTOP implementiert.

Die Interaktion zwischen dem Nutzer und dem Computer CONTROL 2 oder dem mobilen Computer CONTROL 2 -MOBILE kann auf verschiedenste Weise erfolgen und ist nicht auf die konkrete Darstellung der Figur 6 beschränkt. Jegliche sensorische Informationsübermittlung (sichtbar, hörbar, taktil wahrnehmbar) ist möglich.

Während die Komponenten des Computers CONTROL 2 und des mobilen Computers CONTROL 2 -MOBILE getrennt beschrieben wurden, ist es auch möglich, einen Computer einzusetzen, welcher sowohl Komponenten des Computers CONTROL 2, als auch des mobilen Computers CONTROL 2 -MOBILE umfasst.

Das in Figur 5 gezeigte Computerprogramm PROGRAM kann in jedem der Speicher MEM, STORAGE, EXT-MEM der Figur 6 abgelegt sein, auch verteilt auf mehrere Speicher. Ferner kann eine Speicherung alternativ oder zusätzlich auch Cloud-basiert erfolgen.

Die Erfindung wurde voranstehend an einem Ausführungsbeispiel beschrieben. Es versteht sich, dass zahlreiche Änderungen und Modifikationen möglich sind, ohne dass der Rahmen der Erfindung laut den Ansprüchen verlassen wird.

## Patentansprüche

1. Verfahren zur Steuerung einer mit Retrotitting zugefügten Förderstrecke (FC) für Stückgut (P), wobei
- die Förderstrecke (FC) eine Mehrzahl von sich aneinander anschließender Teilförderstrecken (Infeed C, CC1, CC2, CC3) umfasst, welche jeweils von einem Antrieb angetrieben werden,
- wobei die Förderstrecke (FC) eine Erweiterung von mindestens einer bestehenden weiteren Förderstrecke (FA, FB) ist,
- die Steuerung der Antriebe mittels einer Recheneinheit (CONTROL 2) mit einem Machine-Learning-Modell erfolgt,
- das Machine-Learning-Modell hierzu erste Eingangsdaten basierend auf aktuellen Betriebsinformationen (ACTUAL DATA FA FB) der zumindest einen weiteren Förderstrecke (FA, FB) erhält, wobei die zumindest eine weitere Förderstrecke (FA, FB) nicht von dem Machine-Learning-Modell gesteuert wird,
- wobei die Förderstrecke (FC) und die zumindest eine weitere Förderstrecke (FA, FB) Stückgüter (P) auf einen gemeinsamen Abschnitt (MERGER) befördern,
- das Machine-Learning-Modell zuvor mit zweiten Eingangsdaten basierend auf Betriebsinformationen (DATA FA FB) der zumindest einen weiteren Förderstrecke (FA, FB) trainiert wurde,wobei in einem ersten Schritt ein Prognose-Modell erlernt wird, basierend auf historischen Betriebsinformationen der mindestens einen weiteren Förderstrecke und danach das Machine-Learning-Modell unter Verwendung des Prognose-Modells die Steuerung der Förderstrecke trainiert,
- wobei das trainierte Machine-Learning-Modell zur Steuerung Output Werte des Proqnose-Modells, basierend auf aktuellen Betriebsinformationen der mindestens einen weiteren Förderstrecke (FA, FB), sowie aktuelle Betriebsinformationen der von ihm gesteuerten Förderstrecke (FC) erhält,
- und weiterhin das trainierte Machine-Learning-Modell zur Steuerung Geschwindigkeiten für die Teilförderstrecken (Infeed C, CC1, CC2, CC3) der von ihm gesteuerten Förderstrecke (FC) ermittelt vorgibt,- wobei die Betriebsinformationen (ACTUAL DATA FA FB, DATA FA FB) der zumindest einen weiteren Förderstrecke (FA, FB) Messwerte von Sensoren (S1.1, S1.2, S2, S3, S4, S5) zur Erfassung von Stückgut (P) und Geschwindigkeiten von Teilförderstrecken (Infeed A, CA1, CA2, CA3, Infeed B, CB1, CB2, CB3) betreffen.

2. Verfahren nach Anspruch 1, bei dem
die ersten und zweiten Eingangsdaten zumindest einen aus den Betriebsinformationen (ACTUAL DATA FA FB, DATA FA FB) ermittelten zeitlichen Prognosewert über das Eintreffen eines auf der zumindest einen weiteren Förderstrecke (FA, FB) beförderten Stückgutes (P) an einer bestimmten Position umfassen.

3. Verfahren nach Anspruch 2, bei dem
der zumindest eine Prognosewert ermittelt wird, indem zumindest eine Sägezahnfunktion gebildet wird, welche eine verbleibende Zeitspanne bis zum Eintreffen eines auf der zumindest einen weiteren Förderstrecke (FA, FB) beförderten Stückgutes (P) an der bestimmten Position anzeigt.

4. Verfahren nach Anspruch 3, bei dem
die zumindest eine Sägezahnfunktion ausgehend von Messwerten eines die bestimmte Position vermessenenden Sensors zur Erfassung von Stückgut (P) gebildet wird.

5. Verfahren nach einem der Ansprüche 2 bis 4, bei dem der zumindest eine Prognosewert von einem von dem Machine-Learning-Modell unabhängigen Prognose-Modell ermittelt wird,
wobei das Prognose-Modell unter Verwendung von Betriebsinformationen (DATA FA FB) der zumindest einen weiteren Förderstrecke (FA, FB) erstellt wurde.

6. Verfahren nach einem der Ansprüche 1 bis 5, bei dem das Machine-Learning-Modell mit einem Reinforcement-Learning-Algorithmus mit der Vorgabe trainiert wurde, dass Stückgüter (P) auf der gesteuerten Förderstrecke (FC) so zu befördern sind, dass sie den gemeinsamen Abschnitt (MERGER) mit einem vorgegebenen Abstand zu Stückgütern (P) der zumindest einen weiteren Förderstrecke (FA, FB) erreichen.

7. Verfahren nach einem der Ansprüche 2 bis 4 in Kombination mit einem der Ansprüche 1 oder 6, bei dem die bestimmte Position sich auf dem gemeinsamen Abschnitt (MERGER) befindet.

8. Verfahren nach einem der Ansprüche 1 bis 7, bei dem das Machine-Learning-Modell zur Steuerung dritte Eingangsdaten basierend auf aktuellen Betriebsinformationen (ACTUAL DATA FC) der von ihm gesteuerten Förderstrecke (FC) erhält, und
das Machine-Learning-Modell mit vierten Eingangsdaten basierend auf aus einer Simulation erhaltenen Betriebsinformationen (DATA FC) der von ihm gesteuerten Förderstrecke (FC) trainiert wurde.

9. Verfahren nach einem der Ansprüche 1 bis 8, bei dem die zumindest eine weitere Förderstrecke (FA, FB) mit einem dem Machine-Learning-Modell unbekannten Steueralgorithmus gesteuert wird.

10. Vorrichtung oder System zur Datenverarbeitung (CONTROL 2) mit Förderstrecke wie in Anspruch 1, umfassend Mittel zur Ausführung des Verfahrens nach einem der Ansprüche 1 bis 9.

11. Computerprogramm (PROGRAM), umfassend Befehle, die bei der Ausführung des Programms durch einen Computer, zur Steuerung einer Förderstrecke wie in Anspruch 1 definiert, diesen veranlassen, die Schritte des Verfahrens nach einem der Ansprüche 1 bis 9 auszuführen.

12. Gruppe von Computerprogrammen (PROGRAM), umfassend Befehle, die bei der Ausführung des Programms durch einen Computer diesen veranlassen, die Schritte des Verfahrens nach einem der Ansprüche 1 bis 9 auszuführen, umfassend ein erstes Computerprogramm zur Implementierung des Machine-Learning-Modells, und
ein zweites Compuptergrogramm zur Implementierung eines Prognosemodells zur Ermittlung von Prognosewerten über das Eintreffen eines auf der zumindest einen weiteren Förderstrecke (FA, FB) beförderten Stückgutes (P) an einer bestimmten Position.

13. Computerlesbares Speichermedium (MEM) mit einem Computerprogramm (PROGRAM) nach Anspruch 11 oder 12.

14. Datenträgersignal, das das Computerprogramm (PROGRAM) nach Anspruch 11 oder 12 überträgt.

## Claims

1. Process for controlling a conveyor line (FC) for general cargo (P), which conveyor line has been added by retrofitting, wherein
- the conveyor line (FC) comprises a plurality of consecutive conveyor line portions (Infeed C, CC1, CC2, CC3), each of which is driven by a drive,
- the conveyor line (FC) being an extension of at least one existing further conveyor line (FA, FB),
- the drives are controlled by means of a computing unit (CONTROL 2) using a machine learning model,
- the machine learning model accomplishes this by getting first input data on the basis of current operating information (ACTUAL DATA FA FB) of the at least one further conveyor line (FA, FB), the at least one further conveyor line (FA, FB) not being controlled by the machine learning model,
- the conveyor line (FC) and the at least one further conveyor line (FA, FB) conveying items of general cargo (P) to a common section (MERGER),
- the machine learning model has previously been trained with second input data on the basis of operating information (DATA FA FB) of the at least one further conveyor line (FA, FB), a first step involving a forecast model being learned, on the basis of historical operating information of the at least one further conveyor line, and then the machine learning model using the forecast model to train in controlling the conveyor line,
- the trained machine learning model, for the purpose of control, getting output values of the forecast model, on the basis of current operating information of the at least one further conveyor line (FA, FB), and also current operating information of the conveyor line (FC) that it controls,
- and furthermore the trained machine learning model, for the purpose of control, predefines speeds for the conveyor line portions (Infeed C, CC1, CC2, CC3) of the conveyor line (FC) that it controls,
- the operating information (ACTUAL DATA FA FB, DATA FA FB) of the at least one further conveyor line (FA, FB) relating to measured values from sensors (S1.1, S1.2, S2, S3, S4, S5) for detecting general cargo (P) and speeds of conveyor line portions (Infeed A, CA1, CA2, CA3, Infeed B, CB1, CB2, CB3).

2. Process according to Claim 1, in which
the first and second input data comprise at least one temporal forecast value concerning the arrival of an item of general cargo (P) conveyed on the at least one further conveyor line (FA, FB) at a specified position, which forecast value is determined from the operating information (ACTUAL DATA FA FB, DATA FA FB).

3. Process according to Claim 2, in which
the at least one forecast value is ascertained by forming at least one sawtooth function that indicates a remaining period of time before an item of general cargo (P) conveyed on the at least one further conveyor line (FA, FB) arrives at the specified position.

4. Process according to Claim 3, in which
the at least one sawtooth function is formed from measured values from a sensor that surveys the specified position in order to detect general cargo (P).

5. Process according to one of Claims 2 to 4, in which
the at least one forecast value is ascertained by a forecast model that is independent of the machine learning model,
the forecast model having been produced using operating information (DATA FA FB) of the at least one further conveyor line (FA, FB).

6. Process according to one of Claims 1 to 5, in which
the machine learning model has been trained using a reinforcement learning algorithm with the stipulation that items of general cargo (P) need to be conveyed on the controlled conveyor line (FC) in such a way that they reach the common section (MERGER) at a prescribed distance from items of general cargo (P) on the at least one further conveyor line (FA, FB).

7. Process according to one of Claims 2 to 4 in combination with either of Claims 1 and 6, in which
the specified position is located on the common section (MERGER).

8. Process according to one of Claims 1 to 7, in which
the machine learning model, for the purpose of control, gets third input data on the basis of current operating information (ACTUAL DATA FC) of the conveyor line (FC) that it controls, and the machine learning model has been trained using fourth input data on the basis of operating information (DATA FC) of the conveyor line (FC) that it controls, which operating information is gotten from a simulation.

9. Process according to one of Claims 1 to 8, in which
the at least one further conveyor line (FA, FB) is controlled using a control algorithm that is unknown to the machine learning model.

10. Apparatus or system for data processing (CONTROL 2) with a conveyor line as in Claim 1, comprising means for carrying out the process according to one of Claims 1 to 9.

11. Computer program (PROGRAM) comprising instructions that, when the program is executed by a computer, to control a conveyor line as defined in Claim 1, cause said computer to carry out the steps of the process according to one of Claims 1 to 9.

12. Group of computer programs (PROGRAM) comprising instructions that, when the program is executed by a computer, cause said computer to carry out the steps of the process according to one of Claims 1 to 9, comprising
a first computer program for implementing the machine learning model, and
a second computer program for implementing a forecast model to ascertain forecast values concerning the arrival of an item of general cargo (P) conveyed on the at least one further conveyor line (FA, FB) at a specified position.

13. Computer-readable storage medium (MEM) containing a computer program (PROGRAM) according to Claim 11 or 12.

14. Data carrier signal that transmits the computer program (PROGRAM) according to Claim 11 or 12.

## Revendications

1. Procédé de commande d'une ligne de transport (FC) de marchandises diverses (P) ajoutée par rétrofittage, dans lequel
- la ligne de transport (FC) comprend une pluralité de sous-lignes de transport (Infeed C, CC1, CC2, CC3) rattachées les unes aux autres et respectivement entraînées par un entraînement,
- dans lequel la ligne de transport (FC) est une extension d'au moins une ligne de transport (FA, FB) supplémentaire existante,
- la commande des entraînements intervient au moyen d'une unité de calcul (CONTROL 2) munie d'un modèle d'apprentissage automatique,
- le modèle d'apprentissage automatique reçoit à cet effet des premières données d'entrée en se basant sur des informations d'exploitation actuelles (ACTUAL DATA FA FB) de la au moins une ligne de transport (FA, FB) supplémentaire, dans lequel la au moins une ligne de transport (FA, FB) supplémentaire n'est pas commandée par le modèle d'apprentissage automatique,
- dans lequel la ligne de transport (FC) et la au moins une ligne de transport (FA, FB) supplémentaire transportent des marchandises diverses (P) sur une section commune (MERGER),
- le modèle d'apprentissage automatique a été préalablement entraîné avec des secondes données d'entrée en se basant sur des informations d'exploitation (DATA FA FB) de la au moins une ligne de transport (FA, FB) supplémentaire, dans lequel, dans une première étape, un modèle de prévision est nourri en se basant sur des informations d'exploitation historiques de la au moins une ligne de transport supplémentaire, puis le modèle d'apprentissage automatique entraîne la commande de la ligne de transport en utilisant le modèle de prévision,
- dans lequel le modèle d'apprentissage automatique entraîné reçoit, en vue de la commande, des valeurs de sortie du modèle de prévision, en se basant sur des informations d'exploitation actuelles de la au moins une ligne de transport (FA, FB) supplémentaire, ainsi que des informations d'exploitation actuelles de la ligne de transport (FC) qu'il commande,
- et le modèle d'apprentissage automatique entraîné spécifie, en vue de la commande, des vitesses pour les sous-lignes de transport (Infeed C, CC1, CC2, CC3) de la ligne de transport (FC) qu'il commande,
- dans lequel les informations d'exploitation (ACTUAL DATA FA FB, DATA FA FB) de la au moins une ligne de transport (FA, FB) supplémentaire concernent des valeurs de mesure de capteurs (S1.1, S1.2, S2, S3, S4, S5) permettant la détection des marchandises diverses (P) et des vitesses des sous-lignes de transport (Infeed A, CA1, CA2, CA3, Infeed B, CB1, CB2, CB3).

2. Procédé selon la revendication 1, dans lequel les premières et deuxièmes données d'entrée comprennent au moins une valeur prédictive temporelle déterminée à partir des informations d'exploitation (ACTUAL DATA FA FB, DATA FA FB) sur l'arrivée au niveau d'une position déterminée d'une marchandise diverse (P) transportée sur la au moins une ligne de transport (FA, FB) supplémentaire.

3. Procédé selon la revendication 2, dans lequel la au moins une valeur prédictive est déterminée en créant au moins une fonction en dents de scie qui indique un temps restant jusqu'à l'arrivée au niveau de la position déterminée d'une marchandise diverse (P) transportée sur la au moins une ligne de transport (FA, FB) supplémentaire.

4. Procédé selon la revendication 3, dans lequel la au moins une fonction en dents de scie est créée à partir de valeurs de mesure d'un capteur mesurant la position déterminée et permettant la détection de marchandises diverses (P).

5. Procédé selon l'une quelconque des revendications 2 à 4, dans lequel la au moins une valeur prédictive est déterminée par un modèle de prévision indépendant du modèle d'apprentissage automatique,
dans lequel le modèle de prévision a été créé en utilisant des informations d'exploitation (DATA FA FB) de la au moins une ligne de transport (FA, FB) supplémentaire.

6. Procédé selon l'une quelconque des revendications 1 à 5, dans lequel le modèle d'apprentissage automatique a été entraîné avec un algorithme d'apprentissage par renforcement avec la spécification que des marchandises diverses (P) doivent être transportées sur la ligne de transport (FC) commandée de sorte qu'elles atteignent la section commune (MERGER) avec un espacement spécifié par rapport à des marchandises diverses (P) de la au moins une ligne de transport (FA, FB) supplémentaire.

7. Procédé selon l'une quelconque des revendications 2 à 4 en combinaison avec l'une quelconque des revendications 1 ou 6, dans lequel la position déterminée se trouve sur la section commune (MERGER).

8. Procédé selon l'une quelconque des revendications 1 à 7, dans lequel le modèle d'apprentissage automatique reçoit, en vue de la commande, des troisièmes données d'entrée en se basant sur des informations d'exploitation actuelles (ACTUAL DATA FC) de la ligne de transport (FC) qu'il commande, et le modèle d'apprentissage automatique a été entraîné avec des quatrièmes données d'entrée en se basant sur des informations d'exploitation (DATA FC) de la ligne de transport (FC) qu'il commande obtenues à partir d'une simulation.

9. Procédé selon l'une quelconque des revendications 1 à 8, dans lequel la au moins une ligne de transport (FA, FB) supplémentaire est commandée grâce à un algorithme de commande inconnu du modèle d'apprentissage automatique.

10. Dispositif ou système de traitement de données (CONTROL 2) avec une ligne de transport selon la revendication 1, comprenant des moyens permettant de mettre en œuvre le procédé selon l'une quelconque des revendications 1 à 9.

11. Produit de programme informatique (PROGRAM), comprenant des instructions qui, lorsque le programme est exécuté par un ordinateur, l'amènent à mettre en œuvre les étapes du procédé selon l'une quelconque des revendications 1 à 9 en vue de la commande d'une ligne de transport telle que définie dans la revendication 1.

12. Groupe de produits de programmes informatiques (PROGRAM), comprenant des instructions qui, lorsque le programme est exécuté par un ordinateur, l'amènent à mettre en œuvre les étapes du procédé selon l'une quelconque des revendications 1 à 9, comprenant un premier produit de programme informatique permettant de mettre en œuvre le modèle d'apprentissage automatique et un deuxième produit de programme informatique permettant de mettre en œuvre un modèle de prévision permettant de déterminer des valeurs prédictives sur l'arrivée au niveau d'une position déterminée d'une marchandise diverse (P) transportée sur la au moins une ligne de transport (FA, FB) supplémentaire.

13. Support de stockage lisible par ordinateur (MEM) avec un programme informatique (PROGRAM) selon la revendication 11 ou 12.

14. Signal de support de données qui transmet le programme informatique (PROGRAM) selon la revendication 11 ou 12.
